# FASCICULE DE BREVET EUROPEEN

(11) **EP 1 517 032 B1**
(45) Date de publication et mention de la délivrance du brevet: **03.01.2007**
(21) Numéro de dépôt: 04104481.9
(22) Date de dépôt: 16.09.2004
(51) Int. Cl.: F02K 1/12, F02K 1/80

(54) **Volet chaud commandé de tuyère axisymétrique de turboréacteur**
Gesteuerte Klappe für eine rotationssymmetrische Schubdüse eines Strahltriebwerks
Operated flap for an axisymmetrical exhaust nozzle of a jet engine

(30) Priorité: 19.09.2003 FR 0350577
(43) Date de publication de la demande: 23.03.2005
(73) Titulaire: SNECMA, 75015 Paris (FR)
(72) Inventeur: Sevi, Guillaume, 94200 Ivry-sur-Seine (FR); Blanchard, Stéphane, Pierre, Guillaume, 77590 Chartrettes (FR); Pancou, Thierry, Gabriel, 91250 Saintry sur Seine (FR)
(74) Mandataire: Poulin, Gérard

(56) Documents cités:
- EP-A- 0 622 538
- US-A- 4 637 550
- US-A- 4 641 783
- US-A1- 2002 079 404

## Description

### Domaine de l'invention

L'invention concerne un tuyère d'éjection à section d'éjection variable, montée à l'extrémité aval d'une structure fixe de section circulaire d'un canal d'éjection des gaz chauds d'un turboréacteur, en particulier pour des avions militaires.

### Art antérieur et problème posé

Certains avions militaires équipés de turboréacteurs doivent pouvoir assurer des missions dans des conditions de vols subsoniques ou supersoniques. Ces turboréacteurs sont donc dotés d'un système de réchauffe et d'une tuyère de type axisymétrique ou autre, bidimensionnel par exemple. Pour les turbomachines pourvues de réchauffe, la tuyère doit être de section variable. En conséquence, les volets du canal intérieur d'éjection, dits « volets chauds », sont donc montés chacun pivotant autour d'un axe perpendiculaire à l'axe du turboréacteur, tangent à un diamètre qui est proche du diamètre d'éjection, comme décrit dans le document US-A-4 641 783.

Chacun de ces volets est commandé en pivotement par un dispositif commun synchronisé d'inclinaison. Entre chaque volet chaud commandé, se trouve un volet suiveur qui est non commandé et dont l'orientation est réalisée par les deux volets chauds commandés qui lui sont adjacents. Chaque volet suiveur a donc des parties latérales qui sont en frottement avec un volet chaud commandé.

De plus, à ce niveau du canal chaud d'éjection des gaz, se trouve un joint de tuyère qui est en contact avec chacun des volets suiveurs et des volets chauds commandés.

Or, les différents pivotements des volets provoquent une usure par frottement, en particulier au niveau de la zone de contact amont entre chaque volet et le ou les joints d'étanchéité de la tuyère. En effet, il faut constater que ces volets sont en un matériau composite à matrice céramique. Or, les joints de tuyère sont métalliques.

En d'autres termes, au niveau du bord de fuite de la tuyère et de l'axe d'articulation des volets se posent des problèmes d'usure rapide et réciproque du joint de tuyère et de la surface frottante du volet, par frottement relatif, affectant ainsi la durée de vie des éléments de la tuyère.

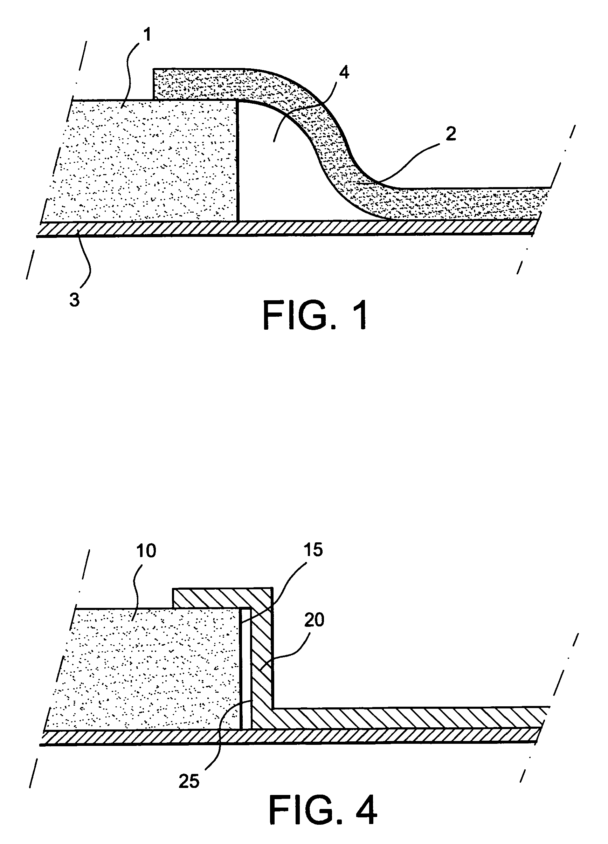

D'autre part, l'usage de matériaux en composite à matrice céramique impose à ces volets de ne pas présenter de rayons de courbure très faible, c'est-à-dire des formes anguleuses. Ceci fait défaut à l'étanchéité entre chaque volet suiveur et ces deux volets chauds commandés adjacents. En effet, en référence à la figure 1, si le volet suiveur 1 peut être de forme compacte, il en est autrement du volet chaud commandé 2 qui affecte une forme de tôle déformée. Ceci a pour conséquence de ménager entre le bord latéral du volet suiveur 1 et la surface du volet chaud commandé 2 et la surface externe du joint de tuyère 3 un espace 4 relativement conséquent.

L'invention vise à remédier à ces inconvénients.

### Résumé de l'invention

A cet effet, l'objet principal de l'invention est un volet chaud commandé de tuyère axisymétrique de turboréacteur, pivotant autour d'un axe perpendiculaire à l'axe du turboréacteur et comprenant :
- une plaque volet en composite à matériau céramique ; et
- une surface de frottement placée en largeur sous la plaque de volet et destinée à rester en contact avec un joint de tuyère, ce joint étant en métal.

Selon l'invention, la surface de frottement est métallique.

Ainsi, le contact métal/métal de cette surface par rapport au joint de tuyère génère beaucoup moins d'usure à ce niveau.

Dans le but d'améliorer l'étanchéité entre un volet suiveur, le volet chaud commandé adjacent et le joint de tuyère, la surface de frottement est limitée latéralement par deux flancs latéraux sensiblement perpendiculaires à la surface de frottement et destinés à être placés en regard et près des flancs latéraux des volets suiveurs adjacents.

Dans une première réalisation préférentielle de l'invention, la surface de frottement est intégrée au volet chaud commandé.

De préférence, cette intégration de la surface de frottement au volet chaud commandé est effectuée lors de la fonderie du volet chaud commandé.

Dans une deuxième réalisation, la surface de frottement est une pièce rapportée et fixée au volet chaud commandé.

Dans ce cas, la fixation peut être effectuée par des vis d'assemblage maintenant une pièce support de la surface de frottement entre la plaque volet et un cadre du volet.

### Brève description des figures

L'invention et ses différentes caractéristiques techniques seront mieux comprises à la lecture de la description détaillée suivante de deux réalisations de l'invention.

Elles sont accompagnées de plusieurs figures représentant respectivement :
- figure 1, en coupe, déjà décrite, la jonction entre un volet suiveur et un volet chaud commandé selon l'art antérieur ;
- figure 2, en vue cavalière, un volet chaud commandé selon une première réalisation de l'invention ;
- figure 3, deux volets chauds commandés entourant un volet suiveur selon la première réalisation de l'invention ;
- figure 4, en vue éclatée, un volet chaud commande selon une deuxième réalisation de l'invention ; et
- figure 5, la jonction entre un volet suiveur et un volet chaud commandés selon l'invention.

### Description détaillée de deux réalisations de l'invention

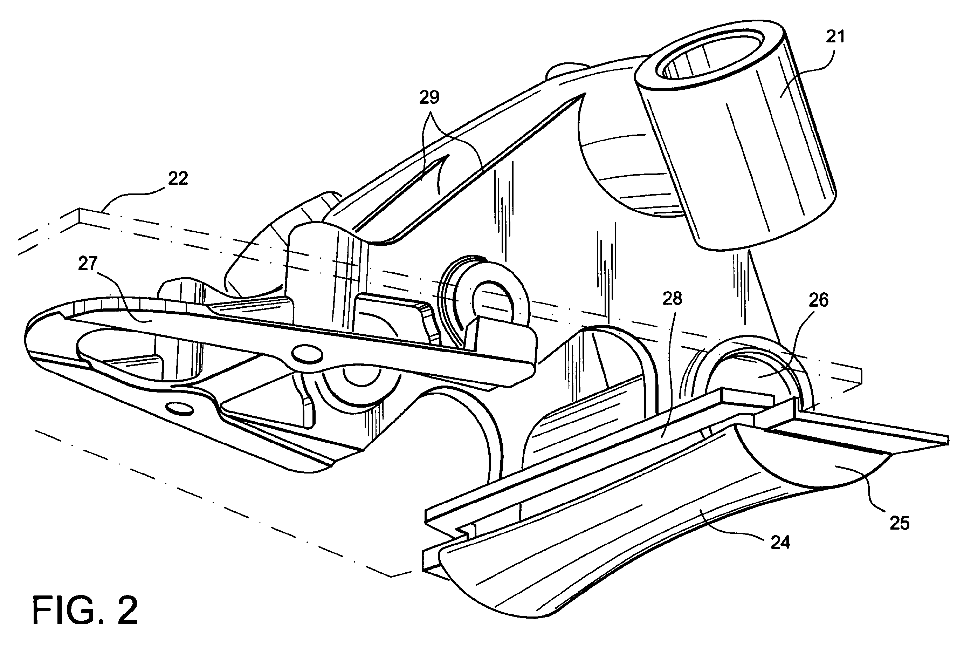

En référence à la figure 2, une première réalisation du volet chaud commandé est la suivante. Un corps principal 29 opposé de deux armatures parallèles porte de chaque côté une douille 21 destinée à recevoir le levier de commande du volet. Dans la partie inférieure du corps 29, se trouve un trou de pivotement 26 autour de l'axe duquel pivote le volet. Egalement dans sa partie inférieure, se trouve une semelle 27 destinée à recevoir la forme complémentaire d'une plaque volet 22 constituée d'un matériau résistant à la chaleur tel qu'un composite amatrice céramique. Dans la partie inférieure arrière, juste en dessous d'une extrémité de la plaque volet 22, se trouve une surface de frottement 24, allongée, de section légèrement bombée. De plus, sur sa longueur, elle est légèrement incurvée de manière à présenter une forme légèrement concave sur la largeur du volet. Elle est limitée latéralement par deux flancs latéraux 25 qui sont perpendiculaires à la forme allongée que présente cette surface de frottement 24.

Dans cette réalisation, la plaque volet 22 fait partie intégrante du volet. En effet, elle est insérée dans une rainure 28 au-dessus de la surface de frottement 24 et est fixée au moment de la fabrication à la semelle 27 du volet, notamment lors de la fonderie. Une grande partie du volet chaud commandé est en métal, alors que la plaque volet 22 est en matériau composite à matrice céramique.

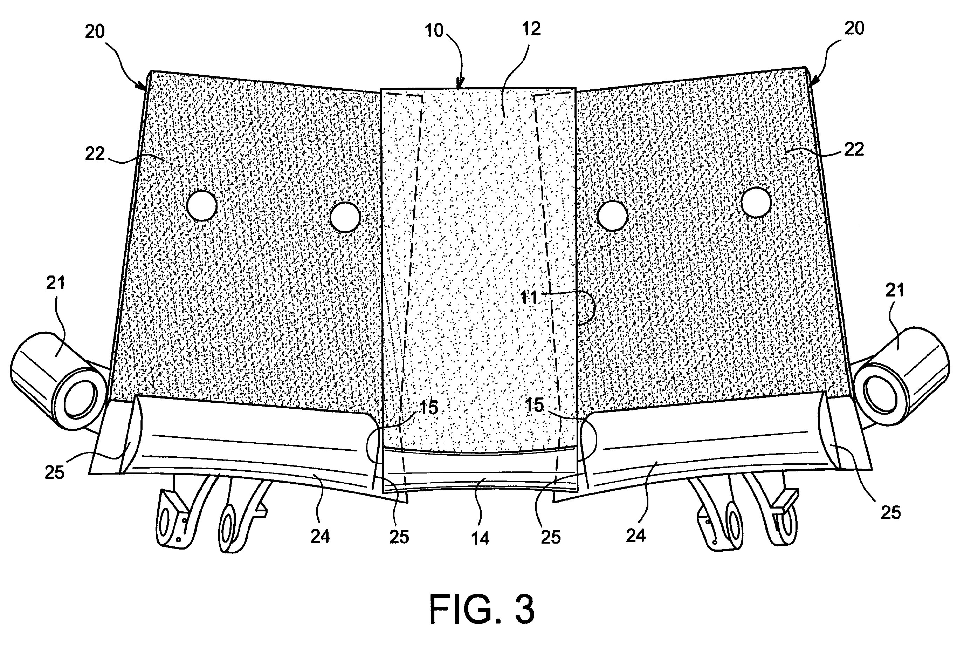

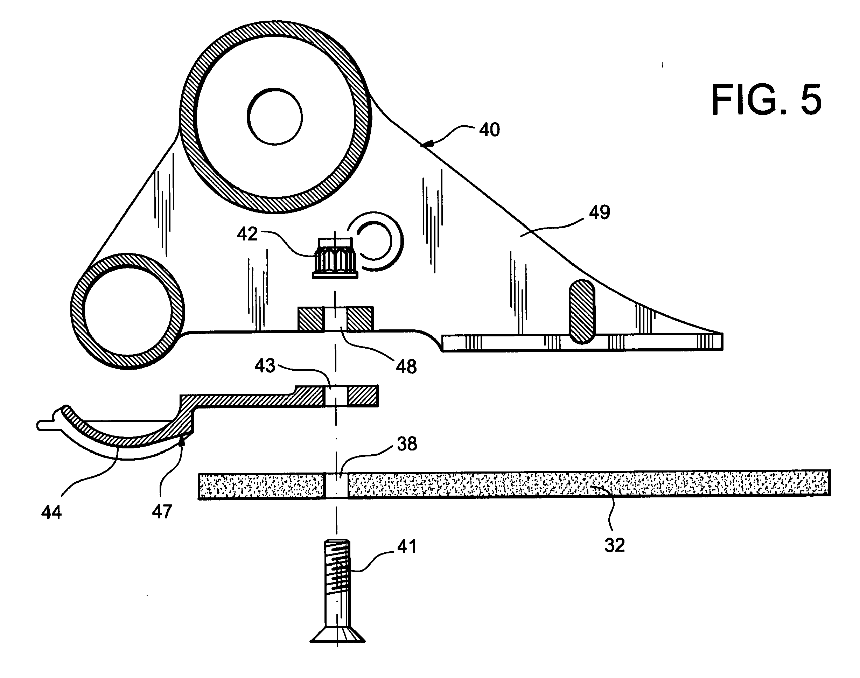

Sur la figure 3, on retrouve deux volets chauds commandés 20 entourant un volet suiveur 10. Chaque plaque volet 22 des volets chauds commandés 20 chevauche latéralement la plaque volet 12 correspondante du volet suiveur 10. Dans le but d'améliorer l'étanchéité de l'ensemble des bases de tous les volets, au niveau de leur surface de frottement 24 pour les volets chauds commandés 20 et 14 pour les volets suiveurs 10, les bords ou flancs latéraux 25 de chaque surface de frottement 24 des volets chauds commandés 20 doivent se trouver le plus près possible des flancs latéraux 15 correspondants et adjacents des volets suiveurs adjacents 10. Or, du fait que les flancs latéraux 25 des surfaces de frottement 24 sont perpendiculaires à celles-ci, et par conséquent, à chaque plaque volet 22, les flancs latéraux 25 des volets chauds commandés 20 et les flancs latéraux 15 des volets suiveurs 10 peuvent se faire face en étant quasiment parallèles, et donc très proches. La figure 4 permet de mieux comprendre, en comparaison avec la figure 1, l'amélioration de l'étanchéité à ce niveau. En effet, les flancs latéraux 15 des volets suiveurs 10 et 25 des volets chauds commandés 20 sont très rapprochés et l'interstice 4 de la figure 1 est considérablement réduit, ce qui améliore l'étanchéité de l'ensemble à ce niveau.

La réalisation représentée à la figure 5, montre une plaque volet 32 qui est destinée à être fixée sur son volet chaud commandé 40 au moyen de plusieurs vis d'assemblage 41 et d'écrous 42. Dans ce cas, la surface de contact 44 est portée par une pièce support 47 qui n'est pas fixée au cadre 49 du volet chaud commandé 40 lors de sa fabrication. Au contraire, elle constitue une pièce en elle-même et est usinée pour constituer une pièce métallique rapportée. On conçoit facilement qu'avec des moyens de fixation, tels que les vis d'assemblage 41, les écrous 42 correspondants et des trous de passage 43 dans la pièce support 47, 48 dans le cadre 49 du volet chaud commandé et 38 dans la plaque volet 32, l'ensemble puisse être solidarisé et démonté indépendamment de la fabrication de l'ensemble.

Bien entendu, la géométrie de la pièce support 47 et en particulier de la surface de frottement 44 et des flancs latéraux doit correspondre à ceux décrits précédemment dans la première réalisation. Dans cette deuxième réalisation, les mêmes avantages d'usure au niveau des surfaces de frottement 44, vis-à-vis du joint de tuyère et d'étanchéité au même niveau, sont obtenus.

## Revendications

1. Volet chaud commandé (20, 40) de tuyère axisymétrique de turboréacteur pivotant autour d'un axe perpendiculaire à l'axe de turboréacteur, et comportant :
- une plaque volet (22, 32) en composite à matrice céramique ; et
- une surface de frottement (24, 44) placée sous la largeur de la plaque volet et destinée à rester en contact avec un joint de tuyère (3), le joint de tuyère étant métallique,
**caractérisé en ce que** la surface de frottement (24, 44) est métallique.

2. Volet chaud commandé selon la revendication 1, **caractérisé en ce que** la surface de frottement (24, 34) est limitée par deux flancs latéraux (25), sensiblement perpendiculaire à la surface de frottement (24, 44) et destinés à être placés en regard et près des flancs latéraux (15) d'un volet suiveur (10) adjacent.

3. Volet chaud commandé selon la revendication 1, **caractérisé en ce que** la surface de frottement (24) est intégrée au volet chaud commandé (20).

4. Volet chaud commandé selon la revendication 3, **caractérisé en ce que** la surface de frottement (24) est intégré au cadre (29) lors de la fonderie du volet chaud commandé (20).

5. Volet chaud commandé selon la revendication 1, **caractérisé en ce que** la surface de frottement (44) est portée par une pièce support (47) qui est rapportée et fixée au volet chaud commandé (40).

6. Volet chaud commandé selon la revendication 5, **caractérisé en ce que** la pièce support (47) est fixée entre le cadre (49) du volet chaud commandé et la plaque volet (32) au moyen de vis d'assemblage (41).

## Claims

1. Turbojet axisymmetric nozzle controlled hot flap shutter (20, 40), pivoting around an axis perpendicular to the turbojet axis, comprising:
- a ceramic composite material flap shutter plate (22, 32); and
- a friction surface (24, 44) placed widthways under the flap shutter plate and intended to remain in contact with a nozzle seal (3), said seal being made of metal,
**characterized in that** the friction surface (24, 44) is made of metal.

2. Controlled hot flap shutter according to claim 1, **characterized in that** the friction surface (24, 34) is limited by two lateral flanks (25), roughly perpendicular to the friction surface (24, 44) and intended to be positioned opposite and close to the lateral flanks (15) of an adjacent tracking flap shutter (10).

3. Controlled hot flap shutter according to claim 1, **characterized in that** the friction surface (24) is integrated in the controlled hot flap shutter (20).

4. Controlled hot flap shutter according to claim 3, **characterized in that** the friction surface (24) is integrated in the frame (29) during the casting of the controlled hot flap shutter (20).

5. Controlled hot flap shutter according to claim 1, **characterized in that** the friction surface (44) is supported by a support part (47) which is added and attached to the controlled hot flap shutter (40).

6. Controlled hot flap shutter according to claim 5, **characterized in that** the support part (47) is attached between the frame (49) of the controlled hot flap shutter and the flap shutter plate (32) by means of assembly screws (41).

## Patentansprüche

1. Gesteuerte Primärstromklappe (20, 40) einer axialsymmetrischen TL-Triebwerk-Düse, die um eine Achse schwenkt, die senkrecht zur Achse des TL-Triebwerks steht, bestehend aus:
- einer Verbund-Klappenplatte (22, 32) mit Keramikmatrize, und
- einer Reiboberfläche (24, 44), die unter der Klappenplatte über deren Breite hinweg angeordnet ist und dazu bestimmt ist, in Kontakt mit einer Düsendichtung (3) zu bleiben, wobei die Düsendichtung aus Metall ausgeführt ist,
**dadurch gekennzeichnet,**
**dass** die Reiboberfläche (24, 44) aus Metall ausgeführt ist.

2. Gesteuerte Primärstromklappe nach Anspruch 1,
**dadurch gekennzeichnet,**
**dass** die Reiboberfläche (24, 44) von zwei Seitenflächen (25) begrenzt wird, die im Wesentlichen im rechten Winkel zu der Reiboberfläche (24, 44) verlaufen und dazu bestimmt sind, gegenüberliegend und nahe an Seitenflächen (15) einer angrenzenden Folgeklappe (10) angeordnet zu werden.

3. Gesteuerte Primärstromklappe nach Anspruch 1,
**dadurch gekennzeichnet,**
**dass** die Reiboberfläche (24) in der gesteuerten Primärstromklappe (20) integriert ist.

4. Gesteuerte Primärstromklappe nach Anspruch 3,
**dadurch gekennzeichnet,**
**dass** die Reiboberfläche (24) beim Gießen der gesteuerten Primärstromklappe (20) in den Rahmen (29) eingesetzt ist.

5. Gesteuerte Primärstromklappe nach Anspruch 1,
**dadurch gekennzeichnet,**
**dass** die Reiboberfläche (44) an einem Tragteil (47) sitzt, das an der gesteuerten Primärstromklappe (40) angebaut und befestigt ist.

6. Gesteuerte Primärstromklappe nach Anspruch 5,
**dadurch gekennzeichnet,**
**dass** das Tragteil (47) mittels Verbindungsschrauben (41) zwischen dem Rahmen (49) der gesteuerten Primärstromklappe und der Klappenplatte (32) befestigt ist.
